# EUROPÄISCHE PATENTANMELDUNG

(11) **EP 1 484 829 A2**
(43) Veröffentlichungstag der Anmeldung: **08.12.2004**
(21) Anmeldenummer: 04011849.9
(22) Anmeldetag: 19.05.2004
(51) Int. Cl.: H02K 5/00

(54) **Motor, insbesondere dessen Befestigung**

(30) Priorität: 04.06.2003 DE 10325502
(71) Anmelder: Behr GmbH & Co.KG, 70469 Stuttgart (DE)
(72) Erfinder: Börkel, Timo, 74336 Brackenheim (DE); Philippin, Erich, 70435 Stuttgart (DE)

(57) **Zusammenfassung**

Die Erfindung betrifft einen Motor (M), insbesondere einen Elektro-Motor (M) zum Einstellen einzelner Kraftfahrzeugkomponenten, wobei am Motorgehäuse Befestigungsmöglichkeiten (1) vorgesehen sind, mit deren Hilfe der Motor (M) mittels Schrauben (S) an einem anderen Bauteil (B) befestigt werden kann, wobei mindestens vier Befestigungsmöglichkeiten (1) am Motorgehäuse vorgesehen sind.

## Beschreibung

Die Erfindung betrifft einen Motor, insbesondere dessen Befestigung, gemäß dem Oberbegriff des Anspruchs 1.

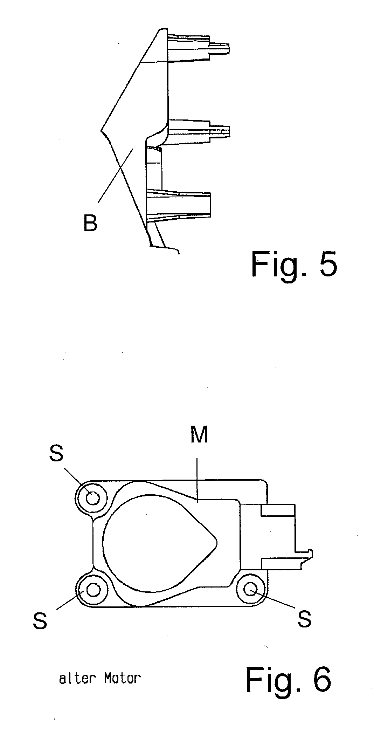

Elektro-Motoren, die insbesondere zum Verstellen von Luftklappen verwendet werden, weisen in aller Regel drei Anschraubpunkte auf, wie in Fig. 6 dargestellt. Der Motor M wird zur Montage an einem anderen Bauteil, das den Motor tragen soll, mittels Schrauben S, die durch die drei Öffnungen gesteckt, die beispielsweise als Dome ausgebildet sind, und in entsprechende, am Bauteil ausgebildeten Gewindebohrungen geschraubt werden. Sämtliche Anschraubpunkte werden hierbei auf Grund der auftretenden Belastungen, insbesondere der auftretenden Drehmomente, benötigt. Diese bekannte Befestigung des Motors lässt jedoch noch Wünsche in Hinblick auf den Bauraum offen, da dieser häufig nicht ausreicht, so dass Zusatzteile erforderlich sind und/oder sehr komplizierte Lösungen zur Umgehung der Bauraumproblematik ausgearbeitet werden müssen, wodurch sich die Herstellungskosten erhöhen.

Es ist Aufgabe der Erfindung, einen verbesserten Motor, insbesondere in Hinblick auf dessen Befestigung, zur Verfügung zu stellen.

Diese Aufgabe wird gelöst durch einen Motor mit den Merkmalen des Anspruchs 1. Vorteilhafte Ausgestaltungen sind Gegenstand der Unteransprüche.

Erfindungsgemäß ist ein Motor, insbesondere ein Elektromotor zum Einstellen einzelner Kraftfahrzeugkomponenten, mit am Motorgehäuse ausgebildeten Befestigungsmöglichkeiten vorgesehen, mit deren Hilfe der Motor mittels Schrauben an einem anderen Bauteil befestigt werden kann, wobei mindestens vier Befestigungsmöglichkeiten am Motorgehäuse vorgesehen sind, die einen flexibleren Einsatz als die bisherigen drei Befestigungsmöglichkeiten ermöglichen. Hierbei kann insbesondere eine der Befestigungsmöglichkeiten unbenutzt bleiben.

Vorzugsweise ist mindestens eine der Befestigungsmöglichkeiten, vorzugsweise mindestens zwei derselben, durch einen Dom gebildet. Hierbei ist vorzugsweise auf der Außenseite des Domes mindestens ein Anschlag oder eine Anlagefläche vorgesehen, um einen Teil der bei Betrieb des Motors auftretenden Drehmomente aufzunehmen und an das andere mit demMotor verbundene Bauteil zu übertragen. Dabei wirkt der Anschlag oder die Anlagefläche mit einem entsprechenden ausgebildeten Anschlag des Bauteils zusammen, so dass beispielsweise zwei als Anschlag oder Anlagefläche ausgebildeten Befestigungsmöglichkeiten mindestens eine Schraube oder einen Klips ersetzen, so dass anstelle von drei Schrauben bzw. drei Klipsen nur noch zwei Schrauben bzw. zwei Klipse erforderlich sind.

Im Folgenden wird die Erfindung anhand eines Ausführungsbeispiels unter Bezugnahme auf die Zeichnung im Einzelnen erläutert. In der Zeichnung zeigen:
- Fig. 1: eine Draufsicht auf einen an einem Bauteil befestigten Motor,
- Fig. 2: eine Draufsicht auf den Motor von Fig. 1, der an einem anderen Bauteil angebracht ist,

- Fig. 3: eine Draufsicht auf den Motor von Fig. 1, der an einem dritten Bauteil angebracht ist,
- Fig. 4: die Ausgestaltung des Bauteils von Fig. 3, an dem der Motor angebracht ist, von oben gesehen,
- Fig. 5: die Ausgestaltung des Bauteils von Fig. 3, an dem der Motor angebracht ist, von der Seite gesehen, und
- Fig. 6: einen Motor gemäß dem Stand der Technik.

Ein Elektro-Motor M weist vier an seinem Gehäuse Befestigungsmöglichkeiten 1 auf, mittels derer er an einem Bauteil B angebracht und befestigt werden kann. Die Befestigungsmöglichkeiten 1 sind vorliegend jeweils als Dome ausgebildet, durch die zur Befestigung am Bauteil B Schrauben gesteckt und beispielsweise in ein im Bauteil B vorgesehenes Gewinde oder in eine vorgesehene Bohrung geschraubt werden können.

Hierbei sind in der Regel nur drei der vier Befestigungsmöglichkeiten 1 erforderlich, um eine ausreichende Sicherheit der Verbindung zwischen Motor M und Bauteil B zur Verfügung zu stellen, so dass der Motor M auch verwendet werden kann, wenn eine Befestigungsmöglichkeit 1 auf Grund der konstruktiven Ausgestaltung des Bauteils B nicht verwendet werden kann.

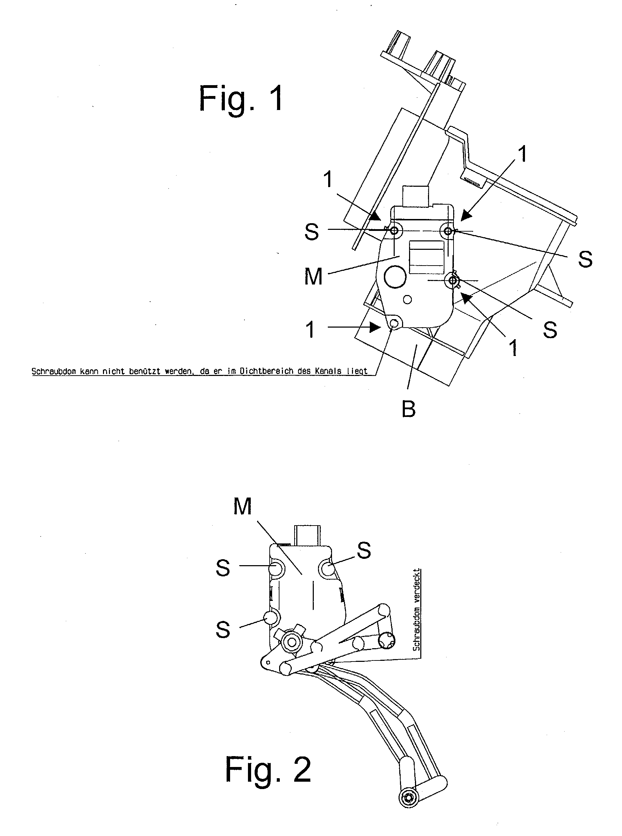

So erfolgt gemäß dem in Fig. 1 dargestellten ersten Ausführungsbeispiels die Befestigung des Motors M am Bauteil B mittels dreier Schrauben S, die durch drei der vier Dome gesteckt und in Gewinde oder Bohrungen, die im Bauteil B vorgesehen sind, geschraubt sind. Die vierte Befestigungsmöglichkeit 1 kann bei diesem Ausführungsbeispiel nicht verwendet werden, da diese in einem Dichtbereich angeordnet ist, so dass im Bauteil B kein Gewinde vorgesehen werden kann.

Gemäß dem zweiten, in Fig. 2 dargestellten Ausführungsbeispiel werden ebenfalls nur drei der vier Befestigungsmöglichkeiten 1 verwendet, da die vierte Befestigungsmöglichkeit 1 von Hebeln und Stangen, die vom Motor M angetrieben werden, überfahren werden. Durch die Überfahrbarkeit dieses Bereichs kann Bauraum eingespart werden. Häufig ist auch eine Vereinfachung der Kinematik möglich.

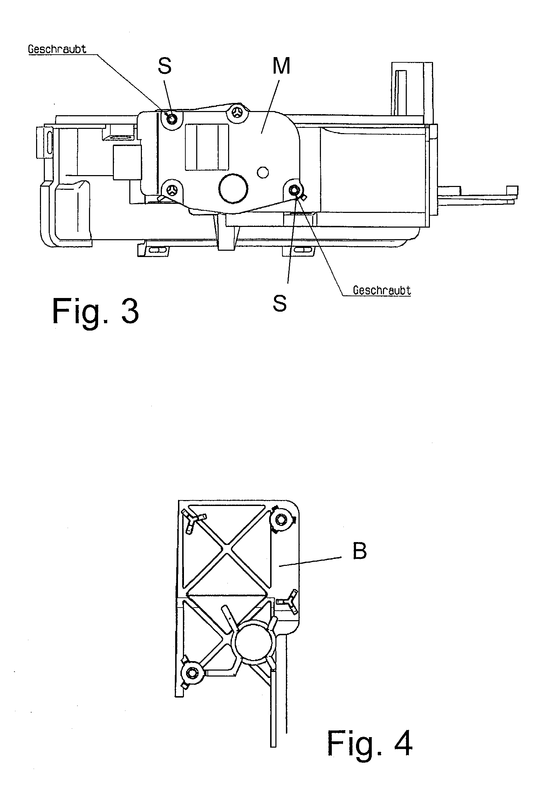

In Fig. 3 ist ein weiteres Ausführungsbeispiel dargestellt, bei dem nur zwei Schrauben S verwendet werden. Die dritte und vierte Befestigungsmöglichkeit 1 ist jeweils derart ausgestaltet, dass sie als Befestigungsrippen ausgebildet sind, die durch Zusammenwirken mit entsprechenden Anlageflächen am Bauteil B, dessen entsprechend zur Anbringung des Motors M ausgebildeter Bereich in den Fig. 4 und 5 dargestellt ist, für eine ausreichende Verdrehsicherung sorgen, so dass auf die dritte oder gar vierte Schraube verzichtet werden kann.

## Patentansprüche

1. Motor, insbesondere Elektro-Motor (M) zum Einstellen einzelner Kraftfahrzeugkomponenten, wobei am Motorgehäuse Befestigungsmöglichkeiten (1) vorgesehen sind, mit deren Hilfe der Motor (M) mittels Schrauben (S) an einem anderen Bauteil (B) befestigt werden kann, **dadurch gekennzeichnet, dass** mindestens vier Befestigungsmöglichkeiten (1) am Motorgehäuse vorgesehen sind.

2. Motor nach Anspruch 1, **dadurch gekennzeichnet, dass** mindestens eine der Befestigungsmöglichkeiten (1) durch einen Dom gebildet ist.

3. Motor nach Anspruch 1 oder 2, **dadurch gekennzeichnet, dass** mindestens eine Befestigungsmöglichkeit (1) als Dom ausgebildet ist, der auf seiner Außenseite mindestens einen Anschlag oder eine Anlagefläche aufweist, um einen Teil der bei Betrieb des Motors (M) auftretenden Drehmomente aufzunehmen und an das andere mit dem Motor (M) verbundene Bauteil (B) zu übertragen.

4. Motor nach Anspruch 3, **dadurch gekennzeichnet, dass** zwei der Befestigungsmöglichkeiten (1) als Dom mit Anschlag oder Anlagefläche ausgebildet sind.

5. Motor nach Anspruch 4, **dadurch gekennzeichnet, dass** im montierten Zustand des Motorgehäuses zwei Befestigungsmöglichkeiten (1) mit Schrauben (S) zusammenwirken und mindestens eine Befestigungsmöglichkeit (1) mit einem oder mehreren Anschlägen oder Anlageflächen zusammenwirkt.

6. Motor nach einem der vorhergehenden Ansprüche, **dadurch gekennzeichnet, dass** vier Befestigungsmöglichkeiten (1) zum Zusammenwirken mit Schrauben (S) vorgesehen sind, wobei mindestens zwei der Befestigungsmöglichkeiten (1) derart ausgestaltet sind, dass sie mit Anschlägen oder Anlageflächen zusammenwirken können, um mindestens eine Schraube (S) zu ersetzen.
